# EUROPEAN PATENT APPLICATION

(11) **EP 0 780 915 A1**
(43) Date of publication of application: **25.06.1997**
(21) Application number: 96308289.6
(22) Date of filing: 15.11.1996
(51) Int. Cl.: H01M 2/10, H01M 10/50, H01M 2/20, B60L 11/18

(54) **A battery connector unit for use with an electric vehicle and a metal-air battery**

(30) Priority: 12.12.1995 IL 11634595
(71) Applicant: ELECTRIC FUEL (E.F.L.) LIMITED, P.O. Box 23073 Jerusalem 91230 (IL)
(72) Inventor: Gilon, Yoel, Jerusalem (IL)
(74) Representative: Baverstock, Michael George Douglas

(57) **Abstract**

A connector unit (10) for use with an electric vehicle and a metal-air battery, said connector unit comprising a battery-supporting surface (14) in combination with a plurality of multi-cell, metal-air battery units (12a,12b) supported thereby and a plurality of releasable connector means for at least indirectly structurally connecting the connector unit to the vehicle and disconnecting it therefrom, the unit being further provided with a first terminal unit (20) having inlets (22) and outlets (24) for coolant fluid, as well as electric cables (26) rated to conduct a power level of at least 50 kVA and a plurality of signal leads (28) for transmitting sensor readings and control instructions between the battery units and the battery control unit, the inlets, outlets, cables and leads being functionally connected to the plurality of multi-cell, metal-air battery units supported by the connector unit.

## Description

The present invention relates to a battery connector unit for an electric vehicle. More particularly, the invention provides means for removably supporting and positioning a metal-air battery within an electric vehicle, provision being made for the rapid and convenient connection and disconnection of the electrical and fluid services required for the operation of the battery.

Batteries for electric vehicles must be sufficiently large to provide vehicle performance approaching that offered by conventional vehicles powered by internal combustion engines. As is well-known, such batteries, of whatever type, are large, heavy, and composed of many cells which are electrically interconnected to provide the desired balance between voltage and current. Each battery unit must be securely held within a moving, vibrating vehicle, in both the vertical and horizontal planes. At the same time, provision must be made for fast, convenient battery removal and replacement, particularly when the recharging method consists of battery exchange.

Electric vehicles may be recharged in any of the following ways:
1. **Electrical recharging while the battery remains in the vehicle.** This method is used, for example, for commercial delivery vans which are locally operated during the day, the recharging being effected through the use of inexpensive electricity at night.
2. **Electrical recharging after battery removal from the vehicle.** The vehicle is provided with a charged battery, without waiting for the recharging of the exhausted battery. This and the following method are appropriate for vehicles which need to be returned to use within a few minutes of entering a service station.
3. **Mechanical recharging after battery removal from the vehicle.** Mechanical recharging of metal-air batteries is usually done by replacing the spent metal anodes. Again, the vehicle is provided with a charged battery without waiting for recharging of the exhausted battery, the latter activity likely being designated to a specialized battery servicing station. Such a refuelling system is described in our co-pending European Patent Application No. 92308404.0.

The present invention provides means for effecting steps of methods 2 and 3 above. These methods become feasible when it is understood that the battery service organization, and not the vehicle owner, is likely to own the battery, or when all the batteries serviced at a refueling location are commonly owned.

Successful electric vehicles are conceptually designed to be electrically driven, and in such vehicles an appropriate location for the battery is provided. Such a location is often near the center, lower part of the vehicle; it is not necessarily the same location which an internal combustion engine would occupy in a conventional vehicle.

Metal-air batteries require a flow of air to supply the oxygen required for the chemical reaction which produces electricity; a connector unit for such batteries should include provision for same. Most metal-air batteries also require cooling air, but it is advantageous to arrange separate air flows for these different purposes, as reaction air is preferably chemically purified before use, while cooling air need only be reasonably free of particulate matter. Some batteries are cooled by means of a liquid, in which case, a plurality of liquid-tight connections are needed.

When air is used for cooling, a return line is sometimes also provided, to enable the hot air coming from the battery to be utilized for heating the passenger cabin.

Further connections required include a plurality of heavy cables for electric power transmission and multiple light wires for electrical sensors and controls.

It is, of course, possible to provide individual male/female sockets for each connection, but effecting such multiple connections each time the battery is removed from the vehicle for servicing, recharging or replacement would be a tedious and time-consuming task.

Battery connector units are described in recent U.S. Patents 5,301,765; 5,378,555; 5,390,754 and 5,392,873. These documents cite many other previous specifications.

In U.S. Patent 5,392,873 (Masuyama, et al.) there is described and claimed a box-like structure which has, in at least one embodiment, provision for driving cooling air across the outer surfaces of the battery unit. However, the box-like structure is large and complex, and so will incur high tooling costs. Moreover, there is no provision for feeding reaction air to each individual cell, as is required for metal-air batteries.

With regard to zinc-air batteries of the type described and claimed by the present inventors in their U.S. Patent No. 5,366,822, it is required that reaction air be fed from below into the battery sub-units, each comprising many battery cells. Prior art connector units are unsuitable for this purpose.

The present invention is therefore intended to obviate the disadvantages of prior art battery connector units, and to provide a suitable connector unit which detachably supports and positions a multi-unit, metal-air battery within an electric vehicle.

It is a further objective of the present invention to provide a supply of reaction air to the battery cells, supply of such air being made to the lower ports of the battery sub-units.

It is a still further objective of the present invention to provide fast, convenient connection and disconnection of all the required electrical and fluid connections between the battery and the vehicle.

The present invention achieves the above objectives by providing a connector unit for use with an electric vehicle and a metal-air battery, said connector unit comprising a battery-supporting surface in combination with a plurality of multi-cell, metal-air battery units supported thereby and a plurality of releasable connector means for at least indirectly structurally connecting said connector unit to said vehicle and disconnecting it therefrom; said unit being further provided with a first terminal unit having inlets and outlets for coolant fluid, as well as electric cables rated to conduct a power level of at least 50 kVA and a plurality of signal leads for transmitting sensor readings and control instructions between said battery units and said battery control unit; said inlets, outlets, cables and leads being functionally connected to said plurality of multi-cell, metal-air battery units supported by said interconnection unit.

In a preferred embodiment of the present invention, there is provided a battery connector unit for use with an electric vehicle having a power unit adapted to be powered by a plurality of multi-cell, metal-air battery units, a coolant system for cooling battery coolant fluid, and a battery control unit for monitoring sensor readings from said battery units and providing control signals for said battery units, wherein said first terminal unit is provided with a plurality of releasable, pressure-fit connectors including fluid-tight inlets and outlets for coolant fluid, which releasably interlink with said complementary second terminal unit provided on said electric vehicle, and wherein said second terminal unit is functionally connected to said vehicle's cooling system, power transmission system, and battery control unit.

With regard to the attachment of the battery-supporting surface to the vehicle, reference is made to our co-pending Israel Patent Specification Serial No. 116,344, which deals extensively with this subject; therefore said attachment is not referred to in the present specification.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Fig. 1: is a perspective, non-detailed view of a preferred embodiment of the connector unit according to the invention;
- Fig. 2: is a plan view of a terminal unit used on said connector unit;
- Fig. 3: is a diagram of air and electric power connections to six multi-cell, metal-air battery units supported by a connector unit;
- Fig. 4: is a perspective view of a battery having connections for water cooling; and
- Fig. 5: is a perspective view of a battery having connections for air cooling.

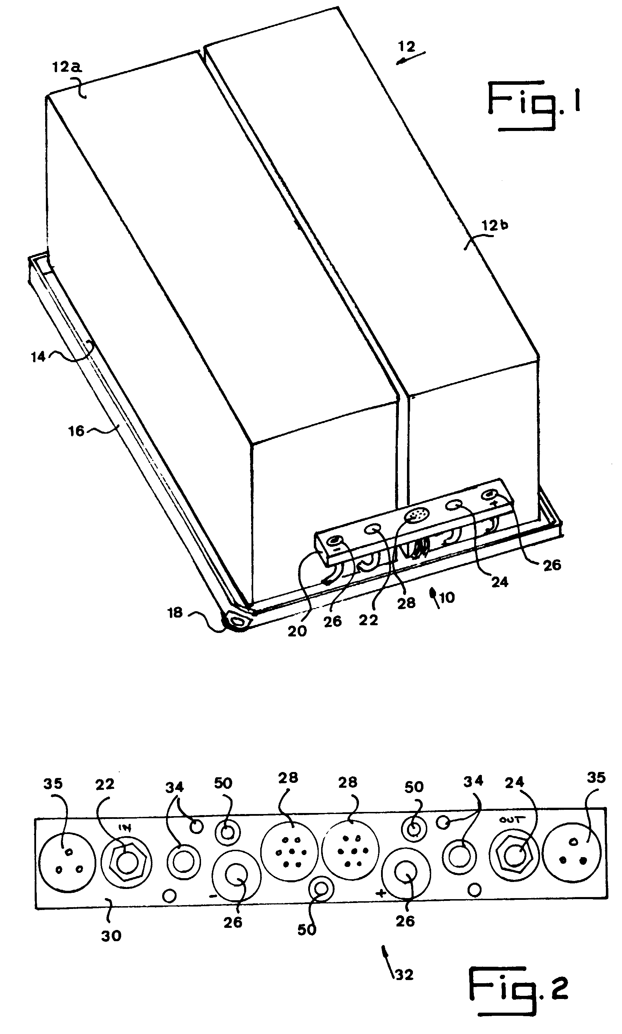

There is seen in Fig. 1 a battery connector unit 10 for use with an electric vehicle (not shown) and a metal-air battery 12. Two multi-cell, metal-air battery units 12a, 12b are supported by a battery-supporting surface 14, shown as a tray 16.

Two diagonally opposite lugs 18 form releasable connector means for structurally connecting the unit 10 to an electric vehicle, and for disconnecting it therefrom. Unit 10 is further provided with a first terminal unit 20 having inlets 22 and outlets 24 for coolant fluid, as well as for power-carrying electric cables 26.

Battery output is transferred through cables 26, rated as conducting a power level of 100 kVA. Also shown in Fig. 1 are a plurality of signal leads 28 for transmitting sensor readings and control instructions between battery units 12a, 12b and a battery control unit (not shown).

First terminal unit 20 forms the female, lower part of a multiconnector, from which inlets 22, outlets 24, cables 26 and leads 28 are functionally connected to said plurality of multi-cell, metal-air battery units 12a, 12b.

Referring now to the rest of the figures, similar numerals are used for identifying similar parts.

There is shown in Fig. 2, in greater detail, a first terminal unit 30 which forms part of battery connector unit 32. Connector unit 32 is configured for use with an electric vehicle having a power unit, that is, one or more electric motors, adapted to be powered by a plurality of multi-cell, metal-air battery units 12a, 12b.

Mechanical lock connectors 34 are provided to prevent disconnection as a result of fluid pressure or vehicle vibration. Connectors 35 transfer electric power for the operation of air blowers or liquid coolant pumps.

With reference to Fig. 2, the first terminal unit 30 is further provided with a plurality of releasable, pressure-fit connectors which include fluid-tight inlets 22 and outlets 24, for the coolant fluid. Such connectors are made of a material which resists attack from the particular water or water/anti-freeze solution being used. Additional inlets 50 for compressed air are also provided in first terminal unit 30.

Signal lead electrical connectors 28 allow connection to a battery control unit for monitoring sensor readings from the battery units 12a, 12b and providing control signals for the battery units. Typical of these sensor and control connections are those relating to the state of battery charge (ampere hours left to drive); measurement of the CO₂ level in reaction air; a warning light for low electrolyte level; verification of battery-to-tray mechanical locking; and a signal light verifying terminal connection.

Connectors 22-50 are releasably interlinkable by means of a complementary second terminal unit (not shown), provided on the vehicle, which functionally connects to the vehicle's cooling system, power conversion and transmission system and battery control unit. The second terminal unit only needs release of the mechanical locking connections 34 to make possible the disconnection of all fluid and electrical conduits. Since all the different connections are held pre-aligned in one unit, no reconnection errors are possible; the only way the terminal unit can be rejoined is in its correct orientation.

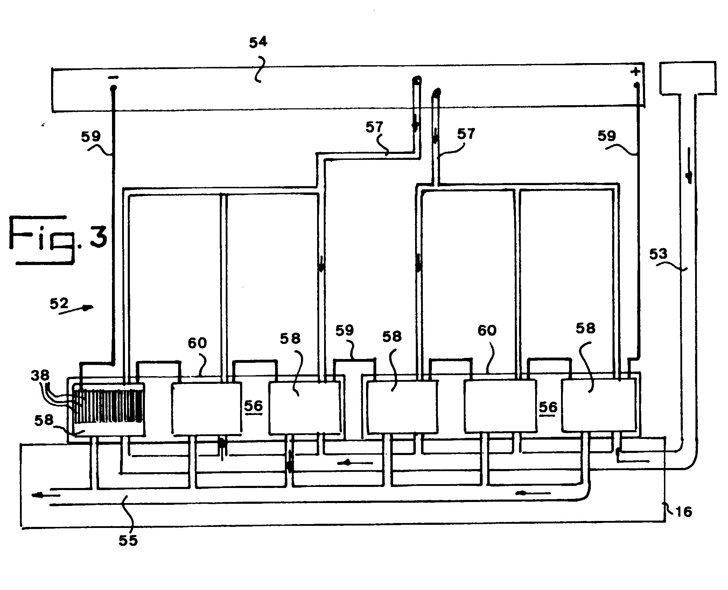

Fig. 3 diagrammatically illustrates a battery connection unit 52, wherein the first terminal unit 54 is functionally connected to two metal-air battery units 56 which are supported by connector unit 52. The metal-air battery units 56 are each comprised of three sub-units 58, housed in a common container 60; each sub-unit 58 comprises at least twenty metal-air cells 38.

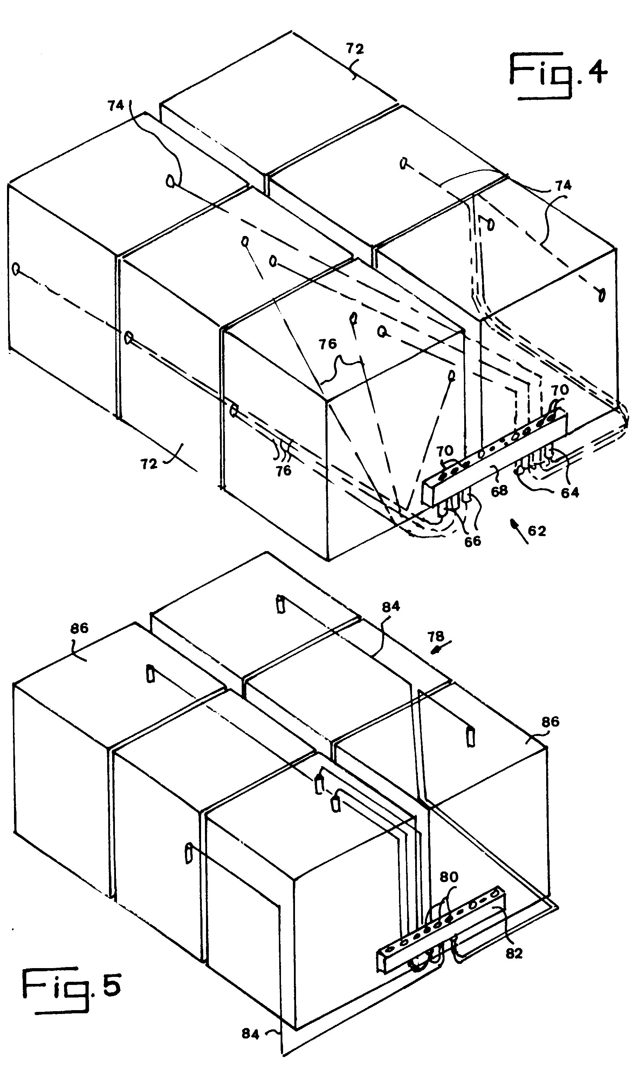

The diagram shows reaction air inlet piping 53, reaction air outlets 55, compressed air inlets 57 supplied separately to each battery unit 56, and electric power cables 59. Coolant piping is shown separately in Figs. 4 and 5. Signal lead connectors 28 are described above with reference to Fig. 2, and have been omitted from Fig. 3 for reasons of clarity.

Fig. 4 illustrates a battery connector unit 62 wherein the coolant fluid is water. When it is climatically necessary, an anti-freeze fluid, such as methyl alcohol, is added. A total of three feed lines 64 and three return lines 66 pass through terminal unit 68, thus providing six liquid-tight connections. Each flow line 64, 66 is further divided, so as to serve all six multi-cell metal-air battery units 72, each with its feed line 74 and return line 76.

Referring now to Fig. 5, there is depicted an air-cooled battery unit 78. The coolant fluid is compressed air, which in this embodiment is released to the atmosphere after use in the battery 78, thus saving return tubing and connections. Three gas-tight inlet connectors 80 in the first terminal unit 82 interlink with the complementary second terminal unit provided on the electric vehicle. Two feed lines 84 are connected to each inlet connector 80, thereby serving all six battery sub-units 86.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A connector unit for use with an electric vehicle and a metal-air battery, said connector unit comprising:
a battery-supporting surface in combination with a plurality of multi-cell, metal-air battery units supported thereby and a plurality of releasable connector means for at least indirectly structurally connecting said connector unit to said vehicle and disconnecting it therefrom;
said unit being further provided with a first terminal unit having inlets and outlets for coolant fluid, as well as electric cables rated to conduct a power level of at least 50 kVA and a plurality of signal leads for transmitting sensor readings and control instructions between said battery units and said battery control unit;
said inlets, outlets, cables and leads being functionally connected to said plurality of multi-cell, metal-air battery units supported by said connector unit.

2. A battery connector unit according to claim 1, for use with an electric vehicle having a power unit adapted to be powered by a plurality of multi-cell, metal-air battery units, a coolant system for cooling battery coolant fluid, and a battery control unit for monitoring sensor readings from said battery units and providing control signals for said battery units,
wherein said first terminal unit is provided with a plurality of releasable, pressure-fit connectors including fluid-tight inlets and outlets for coolant fluid, which releasably interlink with said complementary second terminal unit provided on said electric vehicle; and
wherein said second terminal unit is functionally connected to said vehicle's cooling system, power conversion and transmission system, and battery control unit.

3. A battery connector unit according to claim 1, wherein said first terminal unit is functionally connected to at least three multi-cell, metal-air battery units supported by said connector unit.

4. A battery connector unit according to claim 1, wherein said coolant fluid is water.

5. A battery connector unit according to claim 1, wherein said coolant fluid is water and antifreeze.

6. A battery connector unit according to claim 1, wherein said coolant fluid is air.

7. A battery connector unit according to claim 1, wherein each of said metal-air battery units is comprised of a plurality of sub-units housed in a common container, each of said sub-units comprising at least twenty metal-air cells.

8. A battery connector unit according to claim 6, wherein each of said metal-air battery units comprises at least three sub-units housed in a common container.
